# EUROPEAN PATENT SPECIFICATION

(11) **EP 3 830 457 B1**
(45) Date of publication and mention of the grant of the patent: **15.06.2022**
(21) Application number: 18778887.2
(22) Date of filing: 25.09.2018
(51) Int. Cl.: F16K 27/00, F16K 27/12, E02B 13/02, A01G 25/16, F16K 43/00

(54) **VALVE HOUSING ASSEMBLY**
VENTILGEHÄUSEANORDNUNG
ENSEMBLE LOGEMENT DE SOUPAPE

(30) Priority: 02.08.2018 DE 102018006090
(43) Date of publication of application: 09.06.2021
(60) Divisional application: 20205592.7
(73) Proprietor: HUSQVARNA AB, 561 82 Huskvarna (SE)
(72) Inventor: RENNER, Thomas, 89079 Ulm (DE)
(74) Representative: Finkele, Rolf
(86) International application number: PCT/EP2018/075919
(87) International publication number: WO 2020/025150

(56) References cited:
- EP-A1- 0 327 972
- EP-A1- 2 905 519
- EP-A2- 0 132 989
- BE-A- 521 081
- DE-U1-202007 012 652
- FR-A- 551 604
- US-A- 1 608 772
- US-A- 4 738 275

## Description

### TECHNICAL FIELD

The present disclosure relates to a valve housing assembly, and more particularly to a structural aspect of the valve housing assembly.

### BACKGROUND

A fluid control valve employed for gardening or irrigation purpose may be generally mounted within a valve shaft. The valve shaft may provide protection to the valve against weather conditions, physical impacts, undesired access, and the like. In some situations, such as during winter in order to make the system frost proof, maintenance of the valve / valve shaft, replacement of the valve and/or associated mounting and sealing components, and the like, the valve may have to be removed from the valve shaft.

However, in many situations, the mounting and/or removal of the valve with respect to the valve shaft may be a labor and/or time intensive process mainly due to limited working space available within the shaft, multiple mounting components required to mount the valve within the valve shaft, multiple coupling and/or sealing components required to connect the valve to fluid lines, requirement of specialized tools, and the like.

An example is provided by European patent 0,327,972 which discloses a valve unit for connection in a water supply pipeline buried underground. The valve unit comprises a base part for connection with the upstream and downstream branches of the pipeline. The valve units include stop valves operable manually by appropriate tools, and one-way valves. When being inserted into a sleeve constituting a housing the valve body is retained in place therein by projections engaging in respective apertures formed in the wall of the sleeve. The valve body is connected to a sleeve by means of screws extended radially through the wall of the sleeve into a ring fitted within the sleeve and to which the valve body is bolted. Not having any cover the housing may allow entry of foreign material, such as debris, dust, soil, water, insects, and the like.

Another example is provided by European patent 0,132,989 which discloses a ball valve assembly for controlling a flow in a pipeline. The valve assembly includes a manacle clamp and a bonnet for closing a body to retain a core unit. The body and bonnet have respective peripheral flanges adapted to overlie one another whereby the bonnet is releasably securable to the socket by means of the manacle clamp which is adapted to hold the flanges together. Part of the valve is protruding above the housing and the housing does not include a cover as well.

Yet another example is provided by BE521081 which discloses an actuating device for stop valves such that, after loosening a rapid closure, it can be pulled as a unit. The closure is achieved using folding screws used in cooperation with nuts. The housing does not enclose the valve and there is no cover for the valve as well.

In some situations, the valve shaft may be large in order to provide adequate access to the valve therein which, in turn, may increase an overall footprint and packaging size of the valve shaft. Also, in some situations, foreign materials, such as debris, dust, insects, and the like, may enter the valve shaft from one or more openings thereon, in turn, resulting in contamination and premature deterioration of the components therein. Hence, there is a need for an improved configuration of such valve shafts.

### SUMMARY

In view of the above, it is an objective of the present invention to solve or at least reduce the drawbacks discussed above. The objective is at least partially achieved by a valve housing assembly, according to claim 1 of the present invention. Further embodiments are described in the dependent claims.

The valve housing assembly includes a housing. The housing includes a housing inlet and a housing outlet disposed spaced apart with respect to the housing inlet. The housing also includes at least one valve seat provided therein. The valve housing assembly also includes a valve adapted to be mounted on the at least one valve seat. The valve includes a valve inlet and a valve outlet disposed spaced apart with respect to the valve inlet. Each of the valve inlet and the valve outlet is adapted to align with and contact the housing inlet and the housing outlet respectively in a mounted position of the valve on the at least one valve seat. The valve housing assembly further includes at least one clamping member pivotally coupled within the housing. The at least one clamping member may slidably receive the valve in the housing. The at least one clamping member removably couples the valve with the housing.

The valve may be received in the housing through sliding against the at least one clamping member. The valve may be lowered in the housing by marking the at least one clamping member as reference and lowering the valve in the housing by sliding the valve against the at least one clamping member. Further, after the valve is lowered in the housing in place, the at least one clamping member may also allow some play to adjust the valve with the housing inlet and the housing outlet. Further, the at least one clamping member may have a two-part structure. A first part may be rigidly coupled to the valve housing, and a second part may be hingedly coupled to the first part. The second part may be pivoted towards the walls of the housing, to allow the valve to be slidably received within the housing. Afterwards, the second part may be clamped against the valve to removably secure the valve in place.

The valve may be received within the housing. Afterwards, a sleeve, or a covering, or any other such structure may slide inside the housing at least partially enclosing the valve inside the housing. The sleeve may be hollow so that it may at least partially receive an upper portion of the valve inside the sleeve. An extent of sliding of the sleeve may be defined by a shoulder like portion of the valve. The sleeve enables slidable reception of the valve inside the housing through the sleeve. Further, the at least one clamping member may clamp the sleeve to help keep the valve in place. The sleeve may be provided with a snap-in fit design with respect to the housing. Alternatively, the sleeve may be designed to have an interference fit with the housing.

The at least one clamping member is adapted to pivot between a first position and a second position. In the first position, the at least one clamping member is adapted to hold the valve in the mounted position. In the second position, the at least one clamping member is adapted to allow the valve to be removed from the mounted position. As such, the housing provides a simple, efficient, and compact assembly to enclose the valve therein. During mounting of the valve within the housing, the valve may be placed on the at least one valve seat in a manner such that the valve outlet may align and contact with the housing outlet, and the valve inlet may align and contact with the housing inlet. Further, the at least one clamping member may be moved in the first position to hold the valve in the mounted position. Also, during removal of the valve, the at least one clamping member may be moved to the second position and the valve may be lifted from the at least one valve seat to remove the valve from the housing. This arrangement provides a plug and play arrangement to mount the valve within the housing, in turn, reducing mounting effort, reducing mounting duration, reducing mounting/removal complexity, and the like. Also, this arrangement provides a self-sealing arrangement between the valve outlet and the housing outlet, and the valve inlet and the housing inlet, in turn, reducing mounting components, reducing sealing components, reducing mounting/removal complexity, and component cost.

The at least one clamping member is pivotally coupled to the housing using a hinge mechanism. The hinge mechanism provides a simplified mechanism to move the at least one clamping member between the first position and the second position during mounting or removal of the valve.

According to an embodiment of the present invention, the hinge mechanism includes a bracket and a hinge pin adapted to be disposed pivotally within the bracket. The bracket and the hinge pin provide a simple, robust, low-cost hinge mechanism to provide pivotal movement to the at least one clamping member.

The hinge pin could include a substantially V-shaped configuration. The V-shaped configuration provides predefined end stops to the at least one clamping member in each of the first position and the second position. The predefined end stops provide to hold the at least one clamping member in a desired position during mounting or removal of the valve without falling in or falling back, in turn, improving usability.

The at least one clamping member could include a recess. The recess is adapted to receive a protrusion provided on the bracket in at least one of the first position and the second position. A snap fit between the recess and the protrusion provides a bi-stable position of the at least one clamping member in each of the first position and the second position, in turn, providing a robust retention structure for the at least one clamping member.

According to an embodiment of the present invention, the at least one clamping member includes a first clamping member and a second clamping member. The first clamping member in association with the second clamping member provides an improved, robust, and sturdy retention mechanism to hold the valve on the at least one valve seat within the housing.

According to an embodiment of the present invention, the first clamping member is parallel to the second clamping member in the first position. The parallel configuration provides improved space utilization within the housing with improved aesthetics and compact packaging for the assembly.

According to an embodiment of the present invention, the first clamping member and the second clamping member form a substantially V-shaped configuration in the second position. The V-shaped configuration provides sufficient space within the housing during removal of the valve therefrom with efficient space utilization and compact packaging for the assembly.

According to an embodiment of the present invention, the valve housing assembly includes an inlet sealing surface and an outlet sealing surface provided in association with the housing inlet and the housing outlet respectively. The inlet sealing surface provides the self-sealing, plug and play arrangement between the housing inlet and the valve inlet. Also, the outlet sealing surface provides the self-sealing, plug and play arrangement between the housing outlet and the valve outlet. The self-sealing, plug and play arrangement provides improved usability and improved mounting/removal procedure with limited components.

The inlet sealing surface could be disposed parallel with respect to the outlet sealing surface. The parallel configuration provides the self-sealing, plug and play arrangement between the housing inlet and the valve inlet, and the housing outlet and the valve outlet. The self-sealing, plug and play arrangement provides improved usability and improved mounting/removal procedure with limited components.

According to an embodiment of the present invention, in the mounted position, the inlet sealing surface is adapted to be disposed between the housing inlet and the valve inlet. Also, the outlet sealing surface is adapted to be disposed between the housing outlet and the valve outlet. The location of the inlet sealing surface and the outlet sealing surface provides the self-sealing, plug and play arrangement between the housing inlet and the valve inlet, and the housing outlet and the valve outlet. The self-sealing, plug and play arrangement provides improved usability and improved mounting/removal procedure with limited components.

According to an embodiment of the present invention, the valve includes an adapter provided in association with the valve inlet. The adapter is adapted to contact the inlet sealing surface in the mounted position. The valve also includes a valve outlet seal provided in association with the valve outlet. The valve outlet seal is adapted to contact the outlet sealing surface in the mounted position. The adapter and the valve outlet seal provide the self-sealing, plug and play arrangement between the housing inlet and the valve inlet, and the housing outlet and the valve outlet. The self-sealing, plug and play arrangement provides improved usability and improved mounting/removal procedure with limited components.

According to an embodiment of the present invention, the valve housing assembly includes a connecting pipe provided in association with at least one of the housing inlet and the housing outlet. The connecting pipe provides a simple, efficient, and cost-effective means to provide fluid communication between the housing and a water source.

The valve housing assembly includes a cover portion provided on the housing. The cover portion provides to enclose the valve within the housing, in turn, limiting entry of foreign material, such as debris, dust, soil, water, insects, and the like, within the housing. The cover portion may also limit accidental operation of the valve in some situations.

According to an embodiment of the present invention, the cover portion is a retractable type ball cover. The ball cover provides a simple mechanism to move the cover portion between an open position and a closed position in order to selectively provide access within the housing, in turn, improving usability.

According to an embodiment of the present invention, the housing includes a plurality of openings provided thereon. Each of the plurality of openings is adapted to allow drainage of water from the housing. Additionally, the plurality of opening may also limit entry of foreign material, such as debris, dust, soil, water, insects, and the like, within the housing.

According to an embodiment of the present invention, the plurality of openings is provided in a base portion of the housing. As such, the plurality of openings may provide continuous drainage of water out of the housing due to gravity and natural flow.

According to an embodiment of the present invention, the at least one valve seat includes a plurality of valve seats. Each of the plurality of valve seats is disposed spaced apart with respect to one another. The plurality of valve seats may provide improved space utilization within the housing to enclose a plurality of valves therein with compact packaging.

According to an embodiment of the present invention, the valve is any one of a mechanically operated valve and a water computer. As such, the housing may enclose a wide variety of valves, thus, improving flexibility and usability.

### BRIEF DESCRIPTION OF THE DRAWINGS

The invention will be described in more detail with reference to the enclosed drawings, wherein:
**FIG. 1** shows a perspective view of a valve housing assembly, in accordance with an embodiment of the present invention;
**FIG. 2** shows another perspective view of the valve housing assembly, in accordance with an embodiment of the present invention;
**FIG. 3** shows a cross-sectional view of the valve housing assembly along a section **A-A** (shown in **FIG. 1**), in accordance with an embodiment of the present invention;
**FIG. 4** shows a cross-sectional view of the valve housing assembly along a section **B-B** (shown in **FIG. 1**), in accordance with an embodiment of the present invention;
**FIG. 5** shows another cross-sectional view of the valve housing assembly along the section **B-B,** in accordance with an embodiment of the present invention;
**FIG. 6** shows an enlarged partial perspective view of a portion of the valve housing assembly, in accordance with an embodiment of the present invention;
**FIG. 7** shows a partially exploded perspective cross-sectional view of the valve housing assembly along the section **A-A**, in accordance with an embodiment of the present invention;
**FIG. 8** shows another partial perspective cross-sectional view of the valve housing assembly along the section **A-A**, in accordance with an embodiment of the present invention; and
**FIG. 9** shows a perspective view of another valve housing assembly, in accordance with another embodiment of the present invention.

### DESCRIPTION OF EMBODIMENTS

The present invention will be described more fully hereinafter with reference to the accompanying drawings, in which example embodiments of the invention are shown.

Certain terminology is used herein for convenience only. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "parallel", "inclined", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

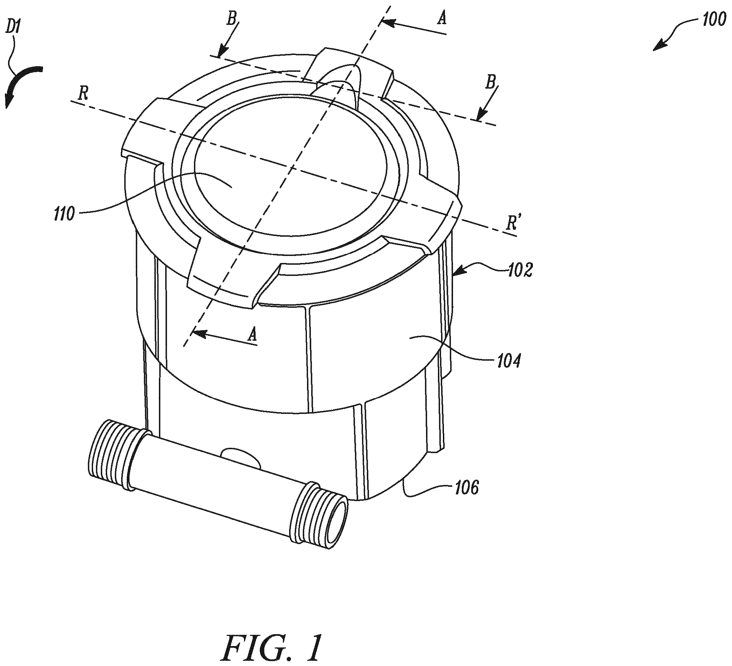

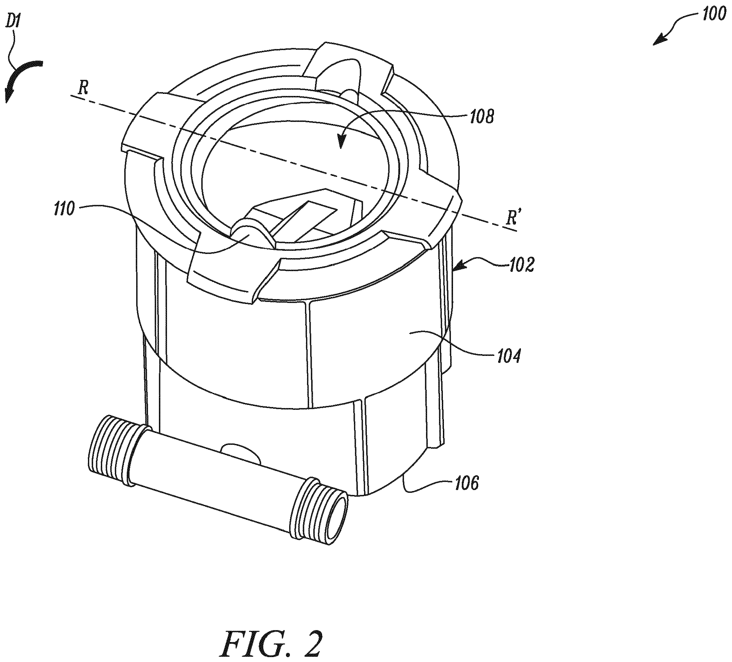

Referring to **FIGS. 1** and **2**, perspective views of a valve housing assembly **100** are illustrated. The valve housing assembly **100** will be hereinafter interchangeably referred to as the "assembly **100**". The assembly **100** includes a housing **102**. In the illustrated embodiment, the housing **102** includes a substantially hollow and cylindrical configuration. In other embodiments, the housing **102** may include any other configuration, such as rectangular, elliptical, and the like. The housing **102** may be made of any material known in the art, such as polymer, metal, and the like. Also, the housing **102** may be manufactured using any process known in the art, such as injection molding, casting, extrusion, stamping, bending, fabrication, machining, and the like.

The housing **102** includes a wall portion **104,** and a base portion **106** connected to the wall portion **104.** Each of the wall portion **104** and the base portion **106** define an inner space **108** of the housing **102.** The housing **102** also includes a cover portion **110** provided in association with the wall portion **104**. The cover portion **110** is adapted to selectively provide access into the inner space **108** in an open position thereof. More specifically, as shown in **FIG. 1**, the cover portion **110** is a retractable type ball cover and is shown in a closed position. The cover portion **110** is adapted to rotate about a rotational axis **R-R'** in a direction **"D1"** to move in the open position, as shown in **FIG. 2****.**

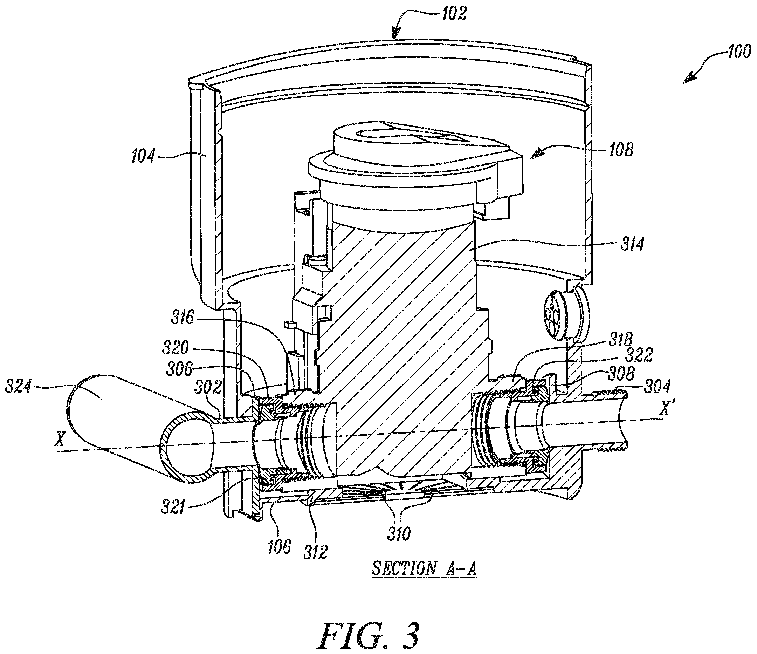

Referring to **FIG. 3**, a cross-sectional view of the assembly **100** along a section **A-A** (shown in **FIG. 1**) is illustrated. The housing **102** includes a housing inlet **302** and a housing outlet **304.** In the illustrated embodiment, the housing outlet **304** is disposed opposite and axially aligned with respect to the housing inlet **302** along an axis **X-X'**. In other embodiments, the housing inlet **302** and the housing outlet **304** may be disposed in any orientation with respect to one another, based on application requirements. The housing inlet **302** is adapted to receive a flow of water into the housing **102**. The housing outlet **304** is adapted to provide the flow of water out of the housing **102.**

The housing inlet **302** includes an inlet sealing surface **306** provided in association therewith. Also, the housing outlet **304** includes an outlet sealing surface **308** provided in association therewith. In the illustrated embodiment, the outlet sealing surface **308** is disposed opposite and axially aligned with respect to the inlet sealing surface **306** along the axis **X-X'**. Also, the inlet sealing surface **306** is disposed substantially parallel with respect to the outlet sealing surface **308.** In other embodiments, the inlet sealing surface **306** and the outlet sealing surface **308** may be disposed in any orientation with respect to one another, based on application requirements. Each of the inlet sealing surface **306** and the outlet sealing surface **308** will be explained in more detail later.

The housing **102** also includes a plurality of openings **310** provided thereon. More specifically, in the illustrated embodiment, each of the plurality of openings **310** is provided in the base portion **106** of the housing **102**. In other embodiments, one or more of the plurality of openings **310** may be provided on any portion of the housing **102,** such as the wall portion **104** and/or the cover portion **110.** Each of the plurality of openings **310** is adapted to allow drainage of water from the housing **102** collected therein due to leakage. Also, each of the plurality of openings **310** is sized in a manner such that entry of foreign material, such as insects, dirt, debris, and the like, may be limited within the housing **102** via the plurality of openings **310.**

The housing **102** further includes a valve seat **312** provided therein. The valve seat **312** is provided adjacent to the base portion **106** of the housing **102.** The assembly **100** also includes a valve **314.** The valve **314** is adapted to be mounted on the valve seat **312**. In the illustrated embodiment, the valve **314** is a mechanically operated valve. In other embodiments, the valve **314** may be an electronically or computer controlled valve **314**, such as a water computer, based on application requirements.

The valve **314** includes a valve inlet **316** and a valve outlet **318**. In the illustrated embodiment, the valve outlet **318** is disposed opposite and axially aligned with respect to the valve inlet **316** along the axis **X-X'**. In other embodiments, the valve inlet **316** and the valve outlet **318** may be disposed in any orientation with respect to one another, based on application requirements. In a mounted position of the valve **314** on the valve seat **312** (as shown in **FIG. 3**), the valve inlet **316** is adapted to contact and axially align with respect to the housing inlet **302** along the axis **X-X'**.

Accordingly, the valve inlet **316** is adapted to receive the flow of water into the valve **314** from the housing inlet **302.** Also, in the mounted position, the valve outlet **318** is adapted to contact and axially align with respect to the housing outlet **304** along the axis **X-X'**. Accordingly, the valve outlet **318** is adapted to provide the flow of water out of the valve **314** and further into the housing outlet **304.** The valve **314** also includes an adapter **320** provided in association with the valve inlet **316.** In the mounted position, the adapter **320** is adapted to contact and axially align the valve **314** with respect to the inlet sealing surface **306** along the axis **X-X'**. The adapter **320** allows the valve **314** to be coupled to the adapter through a threaded engagement. Further, the adapter **314** takes care of any tolerance in sizes between various components and couples the valve **314** in place efficiently. A seal **321** is provided between the adapter 320 and the housing **104**. The seal 321 provides a snug fit between the adapter 320 and walls of the housing **104**. The seal **321** prevents any leakage from the valve **314** in axial as well as radial direction.

More specifically, during mounting of the valve **314** on the valve seat **312**, the adapter **320** may be displaced axially along the axis **X-X'** away from the inlet sealing surface **306**. As the valve **314** may be mounted on the valve seat **312**, the adapter **320** may be displaced axially with a predefined force along the axis **X-X'** toward the inlet sealing surface **306**. As a result, the adapter **320** may provide a plug and play, self-sealing arrangement between the valve inlet **316** and the housing inlet **302**, in turn, limiting mounting components, assembly/disassembly duration, effort, complexity, and the like. Accordingly, in the mounted position, each of the adapter **320** and the inlet sealing surface **306** is disposed between the valve inlet **316** and the housing inlet **302.**

The valve **314** further includes a valve outlet seal **322** provided in association with the valve outlet **318**. In the mounted position, the valve outlet seal **322** is adapted to contact and axially align with respect to the outlet sealing surface **308** along the axis **X-X'**. More specifically, during mounting of the valve **314** on the valve seat **312**, the valve outlet seal **322** may be displaced axially along the axis **X-X'** away from the outlet sealing surface **308**. As the valve **314** may be mounted on the valve seat **312**, the valve outlet seal **322** may be displaced axially with a predefined force along the axis **X-X'** toward the outlet sealing surface **308**. As a result, the valve outlet seal **322** may provide a plug and play, self-sealing arrangement between the valve outlet **318** and the housing outlet **304**, in turn, limiting mounting components, assembly/disassembly duration, effort, complexity, and the like. Accordingly, in the mounted position, each of the valve outlet seal **322** and the outlet sealing surface **308** is disposed between the valve outlet **318** and the housing outlet **304**.

The assembly **100** also includes a connecting pipe **324**. In the illustrated embodiment, the connecting pipe **324** is provided in association with the housing inlet **302.** In other embodiments (not shown), the connecting pipe **324** may be, additionally or optionally, provided in association with the housing outlet **304**. The connecting pipe **324** is adapted to provide the flow of water from a water source (not shown) to the housing inlet **302**. The connecting pipe **324** may also be adapted to provide the flow of water to other downstream components (not shown), such as another valve housing assembly, and the like. The connecting pipe **324** will be explained in more detail later.

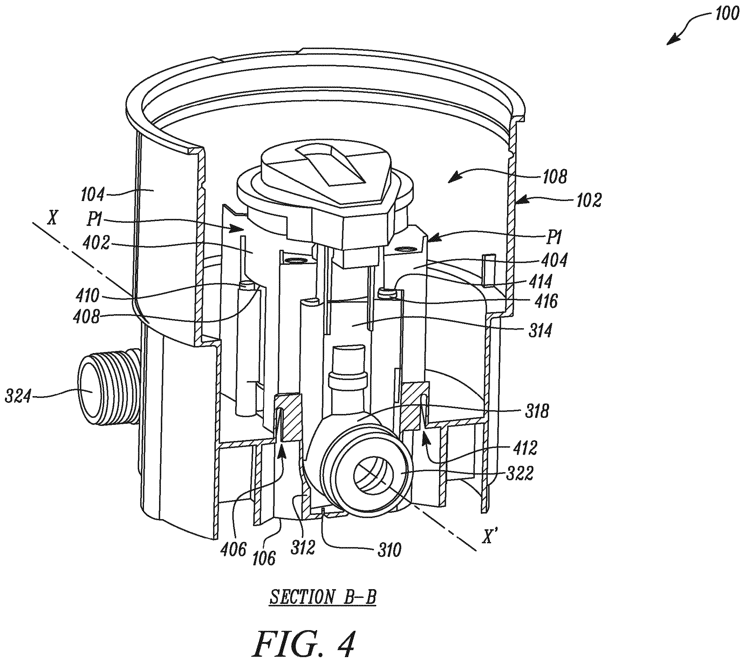

Referring to **FIG. 4**, a cross-sectional view of the assembly **100** along a section **B-B** (shown in **FIG. 1**) is illustrated. The assembly **100** includes at least one clamping member adapted to slidably receive the valve 314 within the housing 102. The at least one clamping member removably couples the valve **314** with the housing **102**. The at least one clamping member includes a first clamping member **402** and a second clamping member **404**. In other embodiments, the assembly **100** member may include single or multiple clamping members based on application requirements. Each of the first clamping member **402** and the second clamping member **404** is adapted to selectively hold the valve **314** on the valve seat **312** in the mounted position.

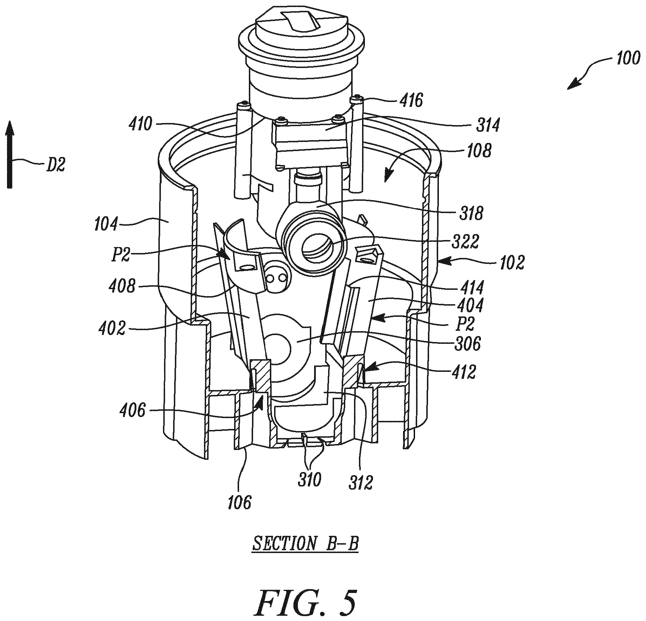

The first clamping member **402** is pivotally coupled within the housing **102** via a first hinge mechanism **406.** Accordingly, the first clamping member **402** is adapted to pivot between a first position "**P1**" and a second position "**P2**" (shown in **FIG. 5**). In the illustrated embodiment, the first position "**P1**" corresponds to a closed position of the first clamping member **402**, and the second position **"P2"** corresponds to an open position of the first clamping member **402**. In the first position "**P1**", the first clamping member **402** is adapted to hold the valve **314** on the valve seat **312** in the mounted position. More specifically, in the first position "**P1**", a lower portion **408** of the first clamping member **402** contacts a portion **410** of the valve **314**, such as a screw dome, a slot, a groove, and the like, and holds the valve **314** in the mounted position.

Also, the second clamping member **404** is pivotally coupled within the housing **102** via a second hinge mechanism **412.** Accordingly, the second clamping member **404** is adapted to pivot between the first position **"P1"** and the second position "**P2**" (shown in **FIG. 5**). In the illustrated embodiment, the first position **"P1"** corresponds to the closed position of the second clamping member **404**, and the second position "**P2**" corresponds to the open position of the second clamping member **404.** In the first position "**P1**", the second clamping member **404** is adapted to hold the valve **314** on the valve seat **312** in the mounted position. More specifically, in the first position **"P1",** a lower portion **414** of the second clamping member **404** contacts a portion **416** of the valve **314**, such as a screw dome, a slot, a groove, and the like, and holds the valve **314** in the mounted position.

In the illustrated embodiment, in the first position "**P1**" of each of the first clamping member **402** and the second clamping member **404**, the first clamping member **402** is disposed substantially parallel with respect to the second clamping member **404**. In other embodiments, in the first position **"P1"** of each of the first clamping member **402** and the second clamping member **404**, the first clamping member **402** may be oriented in any configuration with respect to the second clamping member **404**, based on application requirements.

In an embodiment, the valve 314 may be received in the housing 102 through sliding against the at least one clamping member. The valve 314 may be lowered in the housing 102 by marking the at least one clamping member as reference and lowering the valve 314 in the housing 102 by sliding the valve 314 against the at least one clamping member. Further, after the valve 314 is lowered in the housing 102 in place, the at least one clamping member may also allow some play to adjust the valve 314 with the housing inlet 302 and the housing outlet 304.

In an embodiment, the at least one clamping member may have a two-part structure. A first part may be rigidly coupled to the housing 102, and a second part may be hingedly coupled to the first part. The second part may be pivoted towards the housing 102, to allow the valve 314 to be slidably received within the housing 102. Afterwards, the second part may be clamped against the valve 314 to removably secure the valve 314 in place within the housing 102.

In an embodiment, the valve 314 may be received within the housing 102. Afterwards, a sleeve, or a covering, or any other such structure (not shown) may slide inside the housing 102 at least partially enclosing the valve 314 inside the housing 102. The sleeve may be hollow so that it may at least partially receive an upper portion of the valve 314 inside the sleeve. An extent of sliding of the sleeve may be defined the portion 416 of the valve 314. The sleeve enables slidable reception of the valve 314 inside the housing 102 through the sleeve. Further, the at least one clamping member may clamp the sleeve to help keep the valve 314 in place. The sleeve may be provided with a snap-in fit design with respect to the housing 102. Alternatively, the sleeve may be designed to have an interference fit with the housing 102.

Referring to **FIG. 5**, another cross-sectional view of the assembly **100** along the section **B-B** (shown in **FIG. 1**) is illustrated. In the illustrated embodiment, each of the first clamping member **402** and the second clamping member **404** is shown in the second position "**P2**". In the second position "**P2**", the lower portion **408**, **414** of each of the first clamping member **402** and the second clamping member **404** is disconnected with respect to the portion **410**, **416** of the valve **314** respectively. Accordingly, in the second position "**P2**" of each of the first clamping member **402** and the second clamping member **404,** the valve **314** may be removed from the valve seat **312** in a direction "**D2**".

In the illustrated embodiment, in the second position "**P2**" of each of the first clamping member **402** and the second clamping member **404**, the first clamping member **402** and the second clamping member **404** form a substantially V-shaped configuration. In other embodiments, in the second position "**P2**" of each of the first clamping member **402** and the second clamping member **404**, the first clamping member **402** may be oriented in any configuration with respect to the second clamping member **404,** based on application requirements.

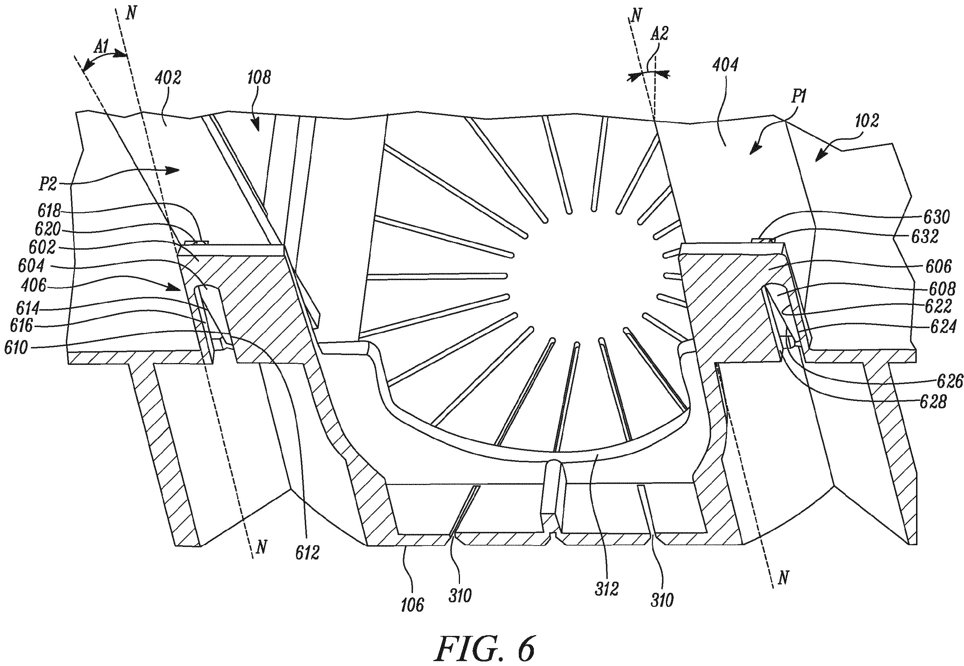

Referring to **FIG. 6**, an enlarged partial perspective view of the first clamping member **402** and the second clamping member **404** is illustrated. The first hinge mechanism **406** includes a first bracket **602**. The first bracket **602** is coupled to the base portion **106** of the housing **102**. The first hinge mechanism **406** also includes a first pin **604**. The first pin **604** is pivotally disposed within the first bracket **602**. Additionally, the second hinge mechanism **412** includes a second bracket **606**. The second bracket **606** is coupled to the base portion **106** of the housing **102**. The second hinge mechanism **412** also includes a second pin **608**. The second pin **608** is pivotally disposed within the second bracket **606**. Each of the first pin **604** and the second pin **608** includes a substantially V-shaped configuration.

Accordingly, in the second position "**P2**" of the first clamping member **402**, an edge **610** of the first pin **604** contacts a section **612** of the first bracket **602**. As such, in the second position "**P2**", the first clamping member **402** pivots at an angle "**A1**" away from normal "**N**". More specifically, the angle "**A1**" limits maximum pivotal movement of the first clamping member **402** in the second position "**P2**" thereof. Also, in the first position "**P1**" of the first clamping member **402**, another edge **614** of the first pin **604** may contact another section **616** of the first bracket **602**. As such, in the first position "**P1**", the first clamping member **402** may pivot at the angle "**A1**" toward normal "**N**". Accordingly, the angle "**A1**" may limit maximum pivotal movement of the first clamping member **402** in the first position "**P1**" thereof.

The first clamping member **402** also includes a first recess **618** provided therein. Further, the first bracket **602** includes a first protrusion **620** provided thereon. In the illustrated embodiment, the first recess **618** and the first protrusion **620** are disposed on the first clamping member **402** and the first bracket **602** respectively such that the first recess **618** is adapted to receive the first protrusion **620** in the second position "**P2**" of the first clamping member **402**. The first recess **618** and the first protrusion **620** are adapted to hold the first clamping member **402** in the second position "**P2**" and limit pivoting of the first clamping member **402** toward the first position "**P1**" thereof, such as during mounting/removal of the valve **314**.

It should be noted that, in other embodiments, the first recess **618** and the first protrusion **620** may be disposed at any location on the first clamping member **402** and the first bracket **602** respectively. For example, in some embodiments, the first recess **618** and the first protrusion **620** may be disposed on the first clamping member **402** and the first bracket **602** respectively such that the first recess **618** may be adapted to receive the first protrusion **620** in the first position "**P1**" of the first clamping member **402**. In such a situation, the first recess **618** and the first protrusion **620** may be adapted to hold the first clamping member **402** in the first position "**P1**" and limit accidental pivoting of the first clamping member **402** toward the second position "**P2**" thereof, such as in the mounted position of the valve **314.**

Further, in the first position "**P1**" of the second clamping member **404**, an edge **622** of the second pin **608** contacts a section **624** of the second bracket **606**. As such, in the first position "**P1**", the second clamping member **404** pivots at an angle "**A2**" toward normal "**N**". More specifically, the angle "**A2**" limits maximum pivotal movement of the second clamping member **404** in the first position "**P1**" thereof. Also, in the second position "**P2**" of the second clamping member **404,** another edge **626** of the second pin **608** may contact another section **628** of the second bracket **606.** As such, in the second position "**P2**", the second clamping member **404** may pivot at the angle "**A2**" away from normal "**N**". Accordingly, the angle **"A2"** may limit maximum pivotal movement of the second clamping member **404** in the second position "**P2**" thereof.

The second clamping member **404** also includes a second recess **630** provided therein. Further, the second bracket **606** includes a second protrusion **632** provided thereon. In the illustrated embodiment, the second recess **630** and the second protrusion **632** are disposed on the second clamping member **404** and the second bracket **606** respectively such that the second recess **630** is adapted to receive the second protrusion **632** in the first position "**P1**" of the second clamping member **404.** The second recess **630** and the second protrusion **632** are adapted to hold the second clamping member **404** in the first position "**P1**" and limit accidental pivoting of the second clamping member **404** toward the second position "**P2**" thereof, such as in the mounted position of the valve **314**.

It should be noted that, in other embodiments, the second recess **630** and the second protrusion **632** may be disposed at any location on the second clamping member **404** and the second bracket **606** respectively. For example, in some embodiments, the second recess **630** and the second protrusion **632** may be disposed on the second clamping member **404** and the second bracket **606** respectively such that the second recess **630** may be adapted to receive the second protrusion **632** in the second position "**P2**" of the second clamping member **404**. In such a situation, the second recess **630** and the second protrusion **632** may be adapted to hold the second clamping member **404** in the second position "**P2**" and limit pivoting of the second clamping member **404** toward the first position "**P1**" thereof, such as during mounting/removal of the valve **314.**

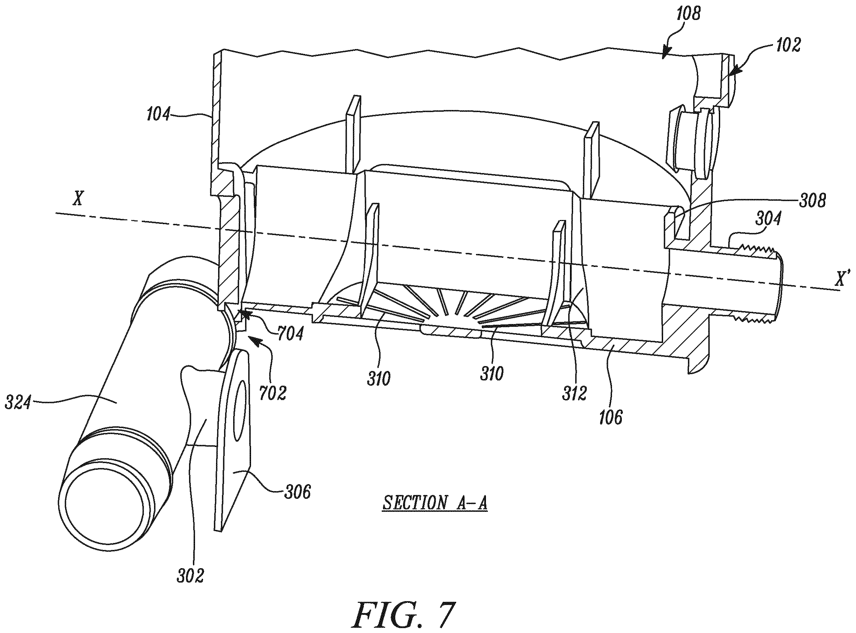

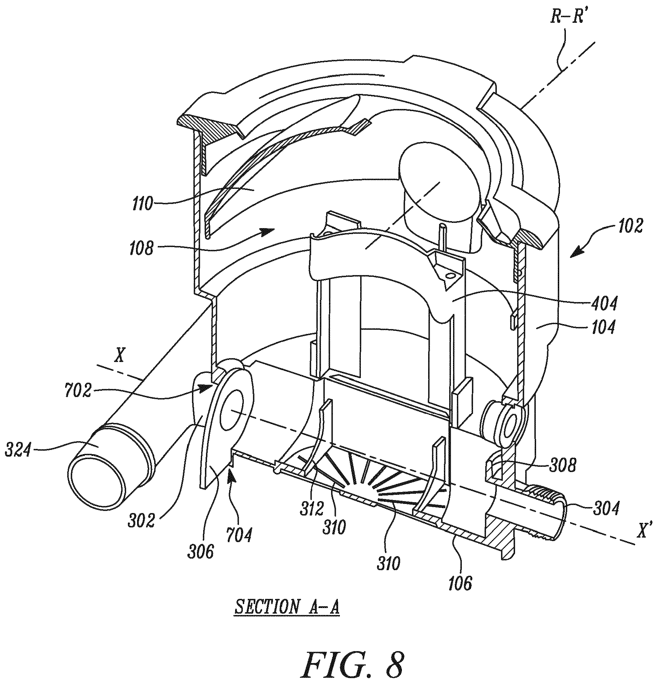

Referring to **FIGS. 7** and **8**, other partial cross-sectional views of the housing **102** along the section **A-A** are illustrated. As illustrated in the accompanying figures, the housing inlet **302** and the inlet sealing surface **306** are coupled to the connecting pipe **324**. More specifically, the housing inlet **302,** the inlet sealing surface **306**, and the connecting pipe **324** are formed as a single component. In such a situation, the connecting pipe **324** along with the housing inlet **302** and the inlet sealing surface **306** may be coupled to the housing **102** via a snap joint **702**. As such, the inlet sealing surface **306** may be snap fitted in a groove **704** provided in the housing **102.** The snap joint **702** provides a simple, plug and play arrangement for the assembly **100**, in turn, limiting mounting components, assembly/disassembly duration, effort, complexity, and the like.

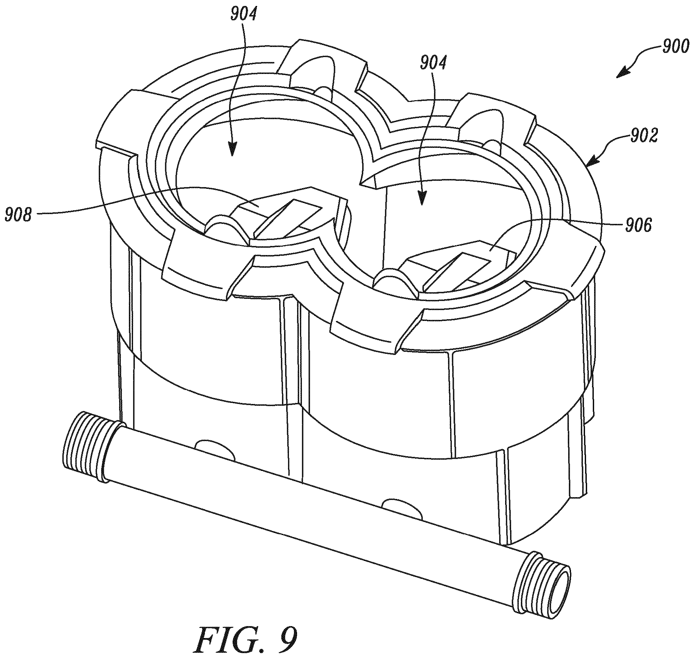

Referring to **FIG. 9**, a perspective view of another assembly **900** is illustrated. In some embodiments, the assembly **900** may include a substantially larger housing **902** and an inner space **904** in relation to the housing **102** and the inner space **108** respectively of the assembly **100**. In such a situation, the housing **902** may include multiple valve seats (not shown). In the illustrated embodiment, the housing **902** includes two valve seats. Each of the valve seats is disposed spaced apart with respect to one another. Accordingly, the housing **902** is adapted to receive two valves **906**, **908** therein. In other embodiments, the housing **902** may include any number of valve seats and valves therein, based on application requirements.

It should be noted that the assembly **900** may additionally include various components (not shown), such as one or more cover portions, housing inlets, housing outlets, inlet sealing surfaces, outlet sealing surfaces, plurality of openings, valve inlets, valve outlets, adapters, valve outlet seals, connecting pipes, first clamping members, second clamping members, first hinge mechanisms, second hinge mechanisms, associated features, and the like, similar to that described in relation to the housing **102**.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Valve Housing Assembly / Assembly
- **102**: Housing
- **104**: Wall Portion
- **106**: Base Portion
- **108**: Inner Space
- **110**: Cover Portion
- **302**: Housing Inlet
- **304**: Housing Outlet
- **306**: Inlet Sealing Surface
- **308**: Outlet Sealing Surface
- **310**: Opening
- **312**: Valve Seat
- **314**: Valve
- **316**: Valve Inlet
- **318**: Valve Outlet
- **320**: Adapter
- **321**: Seal
- **322**: Valve Outlet Seal
- **324**: Connecting Pipe
- **402**: First Clamping Member
- **404**: Second Clamping Member
- **406**: First Hinge Mechanism
- **408**: Lower Portion
- **410**: Portion
- **412**: Second Hinge Mechanism
- **414**: Lower Portion
- **416**: Portion
- **602**: First Bracket
- **604**: First Pin
- **606**: Second Bracket
- **608**: Second Pin
- **610**: Edge
- **612**: Section
- **614**: Edge
- **616**: Section
- **618**: First Recess
- **620**: First Protrusion
- **622**: Edge
- **624**: Section
- **626**: Edge
- **628**: Section
- **630**: Second Recess
- **632**: Second Protrusion
- **702**: Snap Joint
- **704**: Groove
- **900**: Valve Housing Assembly / Assembly
- **902**: Housing
- **904**: Inner Space
- **906**: Valve
- **908**: Valve
- **R-R'**: Rotational Axis
- **X-X'**: Axis
- **A-A**: Section
- **B-B**: Section
- **D1**: Direction
- **D2**: Direction
- **P1**: First Position
- **P2**: Second Position
- **A1**: Angle
- **A2**: Angle
- **N**: Normal

## Claims

1. A valve housing assembly (**100**) comprising:
a housing (**102**) including:
a housing inlet (**302**);
a housing outlet (**304**) disposed spaced apart with respect to the housing inlet (**302**); and
at least one valve seat (**312**); and
a valve (**314**) adapted to be mounted on the at least one valve seat (**312**), the valve (**314**) including:
a valve inlet (**316**); and
a valve outlet (**318**) disposed spaced apart with respect to the valve inlet (**316**),
wherein each of the valve inlet (**316**) and the valve outlet (**318**) is adapted to align with and contact the housing inlet (**302**) and the housing outlet (**304**) respectively in a mounted position of the valve (**314**) on the at least one valve seat (**312**),
with the valve housing assembly (**100**) further includes:
at least one clamping member (**402, 404**) adapted to slidably receive the valve (**314**) within the housing such that the valve (**314**) is removably coupled with the housing (**102**);
**characterized by**
a cover portion (**110**) provided on the housing (**102**) to enclose the valve within the housing (102),
wherein the at least one clamping member (**402**, **404**) is pivotally coupled within the housing (**102**), the at least one clamping member (**402**, **404**) adapted to pivot between a first position (**P1**) and a second position (**P2**),
wherein the at least one clamping member (**402**, **404**) is adapted to hold the valve (**314**) in the mounted position in the first position (**P1**), and
wherein the at least one clamping member (**402, 404**) is adapted to allow the valve (**314**) to be removed from the mounted position in the second position (**P2**).

2. The valve housing assembly (**100**) of claim 1, wherein the at least one clamping member (**402, 404**) is pivotally coupled to the housing (**102**) using a hinge mechanism (**406, 412**).

3. The valve housing assembly (**100**) of claim 2, wherein the hinge mechanism (**406, 412**) includes a bracket (**602, 606**) and a hinge pin (**604, 608**) adapted to be disposed pivotally within the bracket (**602, 606**).

4. The valve housing assembly (**100**) of claim 1, wherein the at least one clamping member (**402, 404**) includes a first clamping member (**402**) and a second clamping member (**404**).

5. The valve housing assembly (**100**) of claim 4, wherein the first clamping member (**402**) is parallel to the second clamping member (**404**) in the first position (**P1**).

6. The valve housing assembly (**100**) of claim 4, wherein the first clamping member (**402**) and the second clamping member (**404**) form a substantially V-shaped configuration in the second position (**P2**).

7. The valve housing assembly (**100**) of claim 1 further includes an inlet sealing surface (**306**) and an outlet sealing surface (**308**) provided in association with the housing inlet (**302**) and the housing outlet (**304**) respectively.

8. The valve housing assembly (**100**) of claim 7, wherein, in the mounted position:
the inlet sealing surface (**306**) is adapted to be disposed between the housing inlet (**302**) and the valve inlet (**316**), and
the outlet sealing surface (**308**) is adapted to be disposed between the housing outlet (**304**) and the valve outlet (**318**).

9. The valve housing assembly (**100**) of claim 7, wherein the valve (**314**) further includes:
an adapter (**320**) provided in association with the valve inlet (**316**), the adapter (**320**) adapted to contact the inlet sealing surface (**306**) in the mounted position, and
a valve outlet seal (**322**) provided in association with the valve outlet (**318**), the valve outlet seal (**322**) adapted to contact the outlet sealing surface (**308**) in the mounted position.

10. The valve housing assembly (**100**) of claim 1 further includes a connecting pipe (**324**) provided in association with at least one of the housing inlet (**302**) and the housing outlet (**304**).

11. The valve housing assembly (**100**) of claim 1, wherein the cover portion (**110**) is a retractable type ball cover.

12. The valve housing assembly (**100**) of claim 1, wherein the housing (**102**) includes a plurality of openings (**310**) provided thereon, each of the plurality of openings (**310**) adapted to allow drainage of water from the housing (**102**).

13. The valve housing assembly (**100**) of claim 12, wherein the plurality of openings (**310**) is provided in a base portion (**106**) of the housing (**102**).

14. The valve housing assembly (**100**) of claim 1, wherein the at least one valve seat (**312**) includes a plurality of valve seats (**312**), each of the plurality of valve seats (**312**) disposed spaced apart with respect to one another.

15. The valve housing assembly (**100**) of claim 1, wherein the valve (**314**) is any one of a mechanically operated valve and a water computer.

## Patentansprüche

1. Ventilgehäuseanordnung (**100**), umfassend:
ein Gehäuse (**102**), umfassend:
einen Gehäuseeinlass (**302**);
einen Gehäuseauslass (**304**), der in Bezug auf den Gehäuseeinlass (**302**) beabstandet angeordnet ist; und
mindestens einen Ventilsitz (**312**); und
ein Ventil (**314**), das geeignet ist, an dem mindestens einen Ventilsitz (**312**) montiert zu werden, wobei das Ventil (**314**) umfasst:
einen Ventileinlass (**316**); und
einen Ventilauslass (**318**), der in Bezug auf den Ventileinlass (**316**) beabstandet angeordnet ist,
wobei sowohl der Ventileinlass (**316**) als auch der Ventilauslass (**318**) angepasst sind, um mit dem Gehäuseeinlass (**302**) bzw. dem Gehäuseauslass (**304**) in einer montierten Position des Ventils (**314**) auf dem mindestens einen Ventilsitz (**312**) auszurichten und in Kontakt zu sein,
wobei die Ventilgehäuseanordnung (**100**) ferner umfasst:
mindestens ein Klemmelement (**402, 404**), das geeignet ist, das Ventil (**314**) verschiebbar innerhalb des Gehäuses aufzunehmen, so dass das Ventil (**314**) entfernbar mit dem Gehäuse (**102**) gekoppelt ist;
**gekennzeichnet durch:**
einen Abdeckabschnitt (**110**), der an dem Gehäuse (**102**) vorgesehen ist, um das Ventil innerhalb des Gehäuses (**102**) einzuschließen,
wobei das mindestens eine Klemmelement (**402, 404**) innerhalb des Gehäuses (**102**) schwenkbar gekoppelt ist, wobei das mindestens eine Klemmelement (**402, 404**) geeignet ist, zwischen einer ersten Position (P1) und einer zweiten Position (P2) zu schwenken,
wobei das mindestens eine Klemmelement (**402, 404**) geeignet ist, das Ventil (314) in der montierten Position in der ersten Position (P1) zu halten, und
wobei das mindestens eine Klemmelement (**402, 404**) angepasst ist, um zu ermöglichen, dass das Ventil (**314**) aus der montierten Position in der zweiten Position (P2) entfernt wird.

2. Ventilgehäuseanordnung (**100**) nach Anspruch 1, wobei das mindestens eine Klemmelement (**402, 404**) unter Verwendung eines Scharniermechanismus (**406, 412**) schwenkbar mit dem Gehäuse (**102**) gekoppelt ist.

3. Ventilgehäuseanordnung (**100**) nach Anspruch 2, wobei der Scharniermechanismus (**406, 412**) eine Halterung (**602, 606**) und einen Scharnierstift (**604, 608**) umfasst, der angepasst ist, um schwenkbar innerhalb der Halterung (**602, 606**) angeordnet zu werden.

4. Ventilgehäuseanordnung (**100**) nach Anspruch 1, wobei das mindestens eine Klemmelement (**402, 404**) ein erstes Klemmelement (**402**) und ein zweites Klemmelement (**404**) umfasst.

5. Ventilgehäuseanordnung (**100**) nach Anspruch 4, wobei das erste Klemmelement (**402**) in der ersten Position (P1) parallel zu dem zweiten Klemmelement (**404**) ist.

6. Ventilgehäuseanordnung (**100**) nach Anspruch 4, wobei das erste Klemmelement (**402**) und das zweite Klemmelement (**404**) in der zweiten Position (P2) eine im Wesentlichen V-förmige Konfiguration bilden.

7. Ventilgehäuseanordnung (**100**) nach Anspruch 1, welche ferner eine Einlassdichtfläche (**306**) und eine Auslassdichtfläche (**308**), die in Verbindung mit dem Gehäuseeinlass (**302**) bzw. dem Gehäuseauslass (**304**) vorgesehen sind, umfasst.

8. Ventilgehäuseanordnung (**100**) nach Anspruch 7, wobei in der montierten Position:
die Einlassdichtfläche (**306**) angepasst ist, um zwischen dem Gehäuseeinlass (**302**) und dem Ventileinlass (**316**) angeordnet zu werden, und
die Auslassdichtfläche (**308**) angepasst ist, um zwischen dem Gehäuseauslass (**304**) und dem Ventilauslass (**318**) angeordnet zu werden.

9. Ventilgehäuseanordnung (**100**) nach Anspruch 7, wobei das Ventil (**314**) ferner umfasst:
einen Adapter (**320**), der in Verbindung mit dem Ventileinlass (**316**) vorgesehen ist, wobei der Adapter (**320**) angepasst ist, um die Einlassdichtfläche (**306**) in der montierten Position zu berühren, und
eine Ventilauslassdichtung (**322**), die in Verbindung mit dem Ventilauslass (**318**) vorgesehen ist, wobei die Ventilauslassdichtung (**322**) angepasst ist, um die Auslassdichtfläche (**308**) in der montierten Position zu berühren.

10. Ventilgehäuseanordnung (**100**) nach Anspruch 1, welche ferner ein Verbindungsrohr (**324**) umfasst, das in Verbindung mit mindestens einem von dem Gehäuseeinlass (**302**) und dem Gehäuseauslass (**304**) bereitgestellt ist.

11. Ventilgehäuseanordnung (**100**) nach Anspruch 1, wobei der Abdeckabschnitt (**110**) eine einziehbare Kugelabdeckung ist.

12. Ventilgehäuseanordnung (**100**) nach Anspruch 1, wobei das Gehäuse (**102**) eine Vielzahl von daran vorgesehene Öffnungen (**310**) umfasst, wobei jede der Vielzahl von Öffnungen (**310**) dafür ausgelegt ist, ein Abfließen von Wasser aus dem Gehäuse (**102**) zu ermöglichen.

13. Ventilgehäuseanordnung (**100**) nach Anspruch 12, wobei die Vielzahl von Öffnungen (**310**) in einem Basisabschnitt (**106**) des Gehäuses (**102**) vorgesehen ist.

14. Ventilgehäuseanordnung (**100**) nach Anspruch 1, wobei der mindestens eine Ventilsitz (**312**) eine Vielzahl von Ventilsitzen (**312**) umfasst, wobei jeder der Vielzahl von Ventilsitzen (**312**) in Bezug zueinander beabstandet angeordnet ist.

15. Ventilgehäuseanordnung (**100**) nach Anspruch 1, wobei das Ventil (**314**) entweder ein mechanisch betriebenes Ventil oder ein Bewässerungscomputer ist.

## Revendications

1. Ensemble de boîtier de soupape (**100**) comprenant :
un boîtier (**102**) comprenant :
une entrée de boîtier (**302**) ;
une sortie de boîtier (**304**) disposée de manière espacée par rapport à l'entrée de boîtier (**302**) ; et
au moins un siège de soupape (**312**) ; et
une soupape (**314**) adaptée pour être montée sur l'au moins un siège de soupape (**312**), la soupape (**314**) comprenant :
une entrée de soupape (**316**) ; et
une sortie de soupape (**318**) disposée de manière espacée par rapport à l'entrée de soupape (**316**),
où chacun de l'entrée de soupape (**316**) et de la sortie de soupape (**318**) est adapté pour s'aligner avec et entrer en contact avec l'entrée de boîtier (**302**) et la sortie de boîtier (**304**) respectivement dans une position montée de la soupape (**314**) sur l'au moins un siège de soupape (**312**),
l'ensemble de boîtier de soupape (**100)** comprend en outre :
au moins un élément de serrage (**402, 404**) adapté pour recevoir de manière coulissante la soupape (314) à l'intérieur du boîtier de sorte que la soupape (**314**) soit couplée de manière amovible au boîtier (**102)** ;
**caractérisé par**
une partie de couvercle (**110**) prévue sur le boîtier (**102**) pour enfermer la soupape à l'intérieur du boîtier (102),
où l'au moins un élément de serrage (**402**, **404**) est couplé de manière pivotante à l'intérieur du boîtier (**102**), l'au moins un élément de serrage (**402**, **404**) étant adapté pour pivoter entre une première position (**P1**) et une seconde position (**P2**),
où l'au moins un élément de serrage (**402**, **404**) est adapté pour maintenir la soupape (**314**) dans la position montée dans la première position (**P1**), et
où l'au moins un élément de serrage (**402**, **404**) est adapté pour permettre à la soupape (**314**) d'être retirée de la position montée dans la seconde position (**P2**).

2. Ensemble de boîtier de soupape (**100**) selon la revendication 1, où l'au moins un élément de serrage (**402**, **404**) est couplé de manière pivotante au boîtier (**102**) en utilisant un mécanisme de charnière (**406**, **412**).

3. Ensemble de boîtier de soupape (**100**) selon la revendication 2, où le mécanisme de charnière (**406**, **412**) comprend un support (**602, 606**) et un axe de charnière (**604**, **608**) adapté pour être disposé de manière pivotante dans le support (**602**, **606**).

4. Ensemble de boîtier de soupape (**100**) selon la revendication 1, où l'au moins un élément de serrage (**402**, **404**) comprend un premier élément de serrage (**402**) et un second élément de serrage (**404**).

5. Ensemble de boîtier de soupape (**100**) selon la revendication 4, où le premier élément de serrage (**402**) est parallèle au second élément de serrage (**404**) dans la première position **(P1)**.

6. Ensemble de boîtier de soupape (**100**) selon la revendication 4, où le premier élément de serrage (**402**) et le second élément de serrage (**404**) forment une configuration sensiblement en forme de V dans la seconde position (**P2**).

7. Ensemble de boîtier de soupape (**100**) selon la revendication 1 comprend en outre une surface d'étanchéité d'entrée (**306**) et une surface d'étanchéité de sortie (**308**) prévues en association avec l'entrée de boîtier (**302**) et la sortie de boîtier (**304**) respectivement.

8. Ensemble de boîtier de soupape (**100**) selon la revendication 7, où, dans la position montée :
la surface d'étanchéité d'entrée (**306**) est adaptée pour être disposée entre l'entrée de boîtier (**302**) et l'entrée de la soupape (**316**), et
la surface d'étanchéité de sortie (**308**) est adaptée pour être disposée entre la sortie de boîtier (**304**) et la sortie de soupape (**318**).

9. Ensemble de boîtier de soupape (**100**) selon la revendication 7, où la soupape (**314**) comprend en outre :
un adaptateur (**320**) prévu en association avec l'entrée de soupape (**316**), l'adaptateur (**320**) étant adapté pour entrer en contact avec la surface d'étanchéité d'entrée (**306**) dans la position montée, et
un joint de sortie de soupape (**322**) prévu en association avec la sortie de soupape (**318**), le joint de sortie de soupape (**322**) étant adapté pour entrer en contact avec la surface d'étanchéité de sortie (**308**) dans la position montée.

10. Ensemble de boîtier de soupape (**100**) selon la revendication 1 comprend en outre un tuyau de raccordement (**324**) prévu en association avec au moins l'une de l'entrée de boîtier (**302**) et de la sortie de boîtier (**304**).

11. Ensemble de boîtier de soupape (**100**) selon la revendication 1, où la partie de couvercle (**110**) est une gaine de type rétractable.

12. Ensemble de boîtier de soupape (**100**) selon la revendication 1, où le boîtier (**102**) comprend une pluralité d'ouvertures (**310**) prévues sur celui-ci, chacune de la pluralité d'ouvertures (**310**) étant adaptée pour permettre le drainage de l'eau du boîtier (**102**).

13. Ensemble de boîtier de soupape (**100**) selon la revendication 12, où la pluralité d'ouvertures (**310**) est prévue dans une partie de base (**106**) du boîtier (**102**).

14. Ensemble de boîtier de soupape (**100**) selon la revendication 1, où l'au moins un siège de soupape (**312**) comprend une pluralité de sièges de soupape (**312**), chacun de la pluralité de sièges de soupape (**312**) étant disposé de manière espacée les uns par rapport aux autres.

15. Ensemble de boîtier de soupape (**100**) selon la revendication 1, où la soupape (**314**) est l'une quelconque d'une soupape actionnée mécaniquement et d'un ordinateur à eau.
